Europäisches Patentamt

(19) European Patent Office

Office européen des brevets

(11) Numéro de publication : **0 277 896 B1**

# (12) FASCICULE DE BREVET EUROPEEN

(45) Date de publication du fascicule du brevet :
06.03.91 Bulletin 91/10

(51) Int. Cl.⁵ : **B60P 3/07**

(21) Numéro de dépôt : 88440003.7

(22) Date de dépôt : 12.01.88

(54) **Elément escamotable de soutien d'un véhicule par ses roues utilisable par paires, notamment sur véhicule porte-voitures.**

(30) Priorité : 16.01.87 FR 8700816

(43) Date de publication de la demande :
10.08.88 Bulletin 88/32

(45) Mention de la délivrance du brevet :
06.03.91 Bulletin 91/10

(84) Etats contractants désignés :
AT BE CH DE ES GB IT LI NL SE

(56) Documents cités :
EP-A- 0 184 969
DE-A- 3 113 707

(73) Titulaire : LOHR INDUSTRIE
29, rue du 14 Juillet
F-67980 Hangenbieten (FR)

(72) Inventeur : André, Jean-Luc
15, route du Vin
F-67310 Dangolsheim (FR)

(74) Mandataire : Metz, Paul
Cabinet METZ PATNI 95, rue de la Ganzau
F-67100 Strasbourg (FR)

## Description

La présente invention se rapporte à un élément escamotable de soutien d'un véhicule par ses roues, utilisable par paires notamment sur véhicule porte-voitures.

En raison de sa constitution et de sa forme générale en bras unitaire, le soutien effectif d'une roue est réalisé par l'emploi simultané de deux bras symétriques disposés et verrouillés en présentation légèrement convergente.

On connaît déjà des bras porteurs à utiliser par paires pour le soutien d'un véhicule par ses roues sur un véhicule porte-voitures, par exemple la réalisation décrite dans la publication EP-A-0 272 192. Ces éléments de soutient comprennent un bras porteur prolongé par une pièce de fixation venant s'accrocher dans les perforations d'un profilé d'accrochage dont est pourvue la face supérieure du profilé porteur délimitant avec son homologue un plan porteur.

Les bras de soutien de ce type ne comportent aucune pièce mobile et sont réalisés pour certains d'une seule pièce. Ils ne peuvent par conséquent se rabattre en position escamotée inopérante afin de libérer le plan de chargement. Pour procéder au chargement ou au déchargement des voitures, il faut dégager le plan de chargement. Il convient donc avant de charger et après le déchargement de chercher et de poser les bras de soutien ou de les enlever et de les ranger. De ce fait, leur mise en oeuvre nécessite une importante manipulation de mise en place, de dépose et de rangement lors des phases précédant le chargement et suivant le déchargement.

Ainsi, s'agissant de pièces à enlever après usage, il y a lieu de prévoir une réserve où elles seront entreposées. Cette réserve occupe sur le véhicule porteur un volume utile important qui pourrait être destiné à une autre ou à d'autres fonctions imposant en plus les contraintes découlant des allées et venues à cette réserve du personnel affecté à cette opération pour les mises en place et le rangement.

Par ailleurs, ces éléments de soutien n'offrent pas toutes les possibilités de réglage souhaitables pour leur mises en oeuvre rapide et commode.

La présente invention a pour but de remédier à ces divers inconvénients en proposant un élément escamotable de soutien d'un véhicule par ses roues à l'aide d'un bras porteur utilisable par paires notamment sur véhicule porte-voitures caractérisé en ce que le bras porteur est monté monté en débattement vertical entre une position haute et une position basse et pivotant dans une pièce d'accrochage entre une position rabattue de repos contre le chant adjacent du profilé porteur et une position sortie de travail sensiblement transversale au profilé porteur, la position opérante de soutien étant obtenue automatiquement à partir de la position sortie de travail par un pivotement d'auto-ajustage vers le pneu de la roue à soutenir, pivotement d'auto-ajustage limité angulairement, et engendré sous l'effet de la charge par le mouvement vertical de descente de l'axe de pivotement du bras en appui de déplacement sur une portée en vue du rapprochement du bras contre le pneu de la roue à soutenir

Le bras de soutien perfectionné selon l'invention présente de nombreux avantages par rapport aux bras fixes connus. Ne pouvant les indiquer tous, on se contentera d'en citer les principaux ci-après :

● il devient inutile de déposer les bras après usage, ceux-ci restent en place en position escamotée ;

● on peut les stocker facilement en disposant les bras vers l'extérieur du plan défini par les profilés porteurs ce qui permet de libérer l'espace utile du plan de chargement ;

● l'ajustement en hauteur et corrélativement en orientation du bras permet de diviser le pas déterminé par l'intervalle entre les structures réceptrices répétitives prévues sur ou dans le profilé porteur. Cet ajustement confère une liberté totale de fractionnement et donc une grande facilité d'amenée du bras en contact avec la roue à soutenir lors du chargement et de dégagement lors du déchargement par l'automatisation du pivotement d'ajustage vers la position opérante définitive ;

● sécurité accrue provenant de la force de réaction en pivotement de rapprochement des bras de la paire par action de la charge à travers le bras et son axe de pivotement sur une rampe d'appui ;

● le débattement vertical du bras offre une plus grande latitude de mouvement et donc toute la facilité de mise en place du profilé porteur sur le plan de chargement ;

● verrouillage du bras en position escamotée.

L'invention sera mieux comprise grâce à la description ci-après, qui se rapporte à une mode de réalisation donné à titre d'exemple non limitatif, dans le cas de deux exemples d'application, expliqués en référence aux dessins accompagnants dans lesquels :

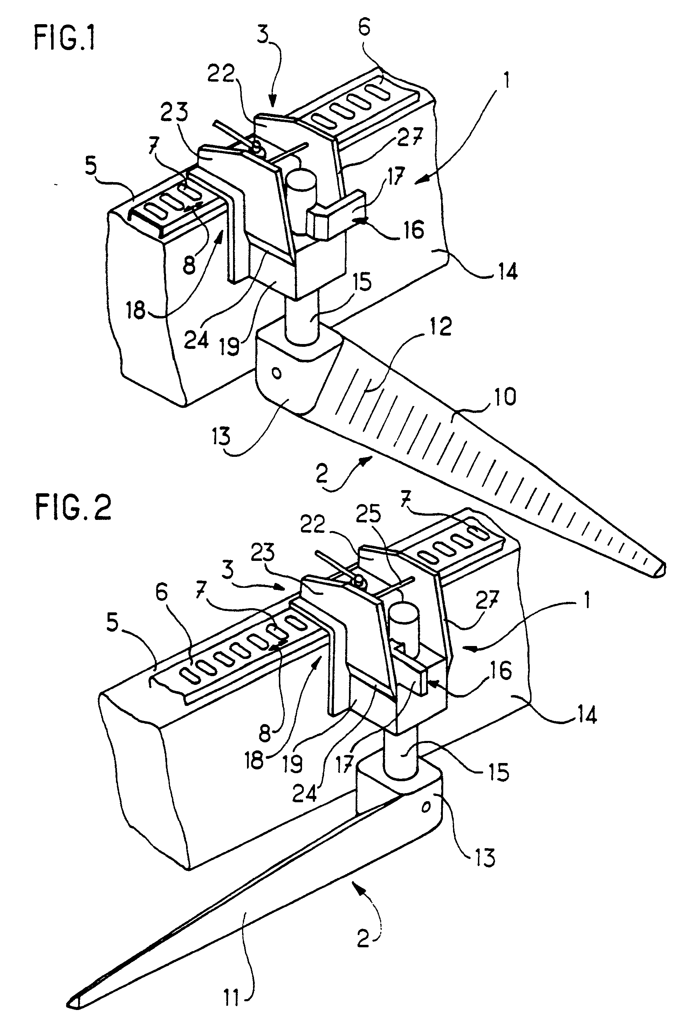

– la figure 1 est une vue en perspective du bras unitaire de soutien selon l'invention en position opérante ;

– la figure 2 est une vue en perspective du bras unitaire de soutien selon l'invention en position escamotée ;

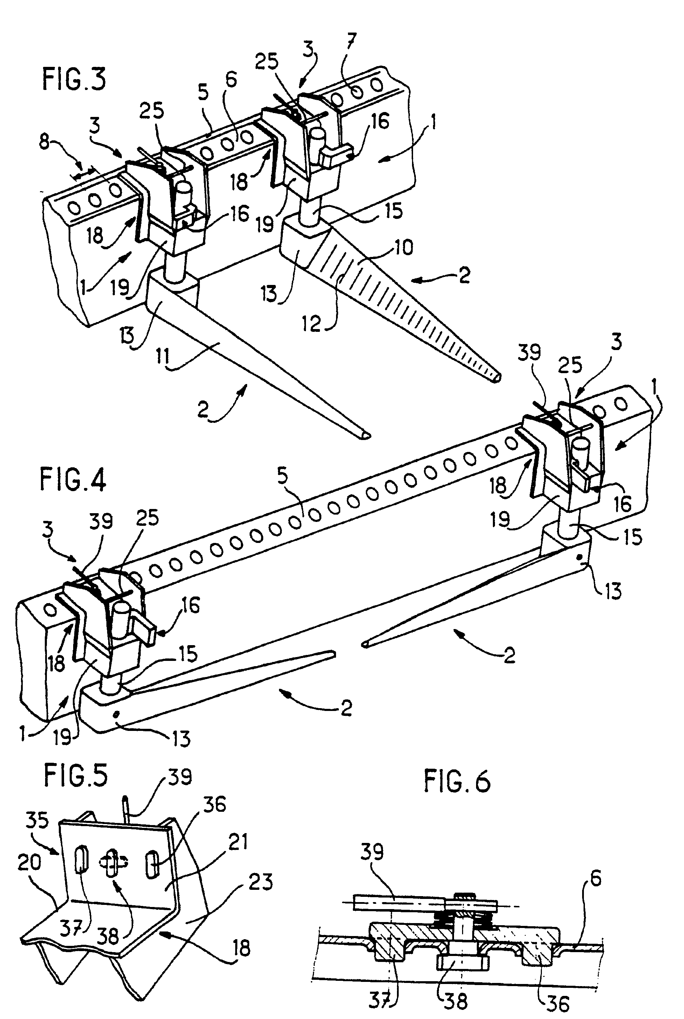

– la figure 3 est une vue en perspective d'une paire d'éléments de soutien, selon le mode préféré de réalisation, disposés rapprochés et en léger pincement en position de soutien d'une roue ;

– la figure 4 est une vue en perspective d'une paire d'éléments de soutien selon l'invention, conformément au mode préféré de la figure 3, en position escamotée contre le chant adjacent du longeron porteur ;

– la figure 5 est une vue en perspective représentant la sous-face de la semelle d'appui comportant les moyens d'accrochage et de verrouillage;

– la figure 6 est une vue en coupe longitudinale de la partie supérieure du profilé porteur montrant la pénétration des structures d'accrochage et de verrouillage dans les perforations du profilé de fixation ;

– la figure 7 est une vue de profil de l'élément de soutien selon l'invention accroché sur le profilé porteur ;

– la figure 8 est une vue de profil de l'élément de soutien selon une variante à accrocher, susceptible de coulissement le long d'un profilé de coulissement rapporté sur la face supérieure du profilé porteur avec agrandissement sur la partie supérieure d'accrochage ;

– la figure 9 est une vue schématique en perspective d'un autre mode de réalisation mettant en oeuvre un profil de came sur l'axe de pivotement;

– la figure 10 est une vue en perspective illustrant les positions extrêmes de la pièce de butée et du bras porteur en configuration de soutien ;

– la figure 11 est une vue schématique en plan avec agrandissement en perspective sur la rampe illustrant la façon dont le pas peut être divisé grâce au jeu de la pièce de butée sur la rampe inclinée de bordure ;

– la figure 12 est une vue schématique en perspective illustrant la façon dont la pièce de butée réalise le verrouillage en position rabattue ;

– la figure 13 est une vue schématique illustrant la possibilité pour le bras selon l'invention de s'ajuster verticalement pour absorber les différences de hauteur sur le plan de chargement.

L'élément escamotable de soutien selon l'invention procède de l'idée générale inventive qui consiste à réaliser un bras de soutien rabattable dans une position escamotée par pivotement et susceptible d'un débattement vertical entre une position basse et une position haute. Ledit bras porté par une structure d'accrochage vient se fixer sur un profilé porteur à intervalles déterminés par le pas de structures réceptrices. Le bras peut se déplacer verticalement par rapport au profilé porteur horizontal entre deux positions extrêmes et pivoter entre une position escamotée de repos et une position opérante perpendiculaire au profilé porteur, position que le bras vient occuper automatiquement sous l'effet de la charge.

La position opérante est rendue ajustable par une fonction mécanique entre la pièce d'accrochage portant l'axe de pivotement et ledit axe de pivotement.

On décrira ci-après les moyens essentiels de l'invention et quelques variantes directes, il est bien entendu que diverses formes de réalisation dérivées entrent dans son cadre.

De façon générale, l'élément escamotable de soutien 1 selon l'invention se compose d'un bras horizontal porteur 2, prolongé verticalement vers le haut par une structure d'accrochage 3 pour son montage amovible sur un support rectiligne porteur par exemple un profilé 4, longeron, poutre métallique pleine ou creuse, ou tout autre comportant, rapporté sur sa face supérieure 5, un profilé d'accrochage et de verrouillage 6 traversé par des ouvertures telles que 7, par exemple de forme oblongue, se répétant en une suite linéaire à intervalles constants 8, c'est-à-dire l'intervalle minimal existant entre deux positions rapprochées.

La même fonction et les mêmes effets sont obtenus par l'emploi d'un profilé porteur creux 9, dont la face supérieure 5 serait perforée de façon identique ou analogue à celle du profilé d'accrochage et de verrouillage 6.

A la manière des réalisations antérieures, le bras porteur 2 affecte de préférence une forme générale prismatique à deux versants 10 et 11, présentant chacun, ou l'un ou l'autre, un relief approprié, par exemple une série de stries ou de nervures inclinées telles que 12 pour le renforcement mécanique et l'immobilisation du pneu équipant la roue à soutenir.

Dans les versions représentées, les versants 10 et 11 présentent des configurations différentes depuis un grand versant oblique à nervures avec un versant adjacent vertical et lisse, jusqu'à une configuration en deux versants identiques, également striés, et de même surface, de manière à servir indifféremment de pièce droite ou gauche, dans le cas habituel d'utilisation par paire.

Pour des raisons de commodité, la majorité des variantes représentées le sont avec un versant incliné strié 10 et un versant vertical 11 lisse. Il est bien entendu que la portée de la protection s'étend à toutes les variantes, quelles que soient la configuration des versants et la forme de leurs faces.

Le bras porteur 2 comporte, à son extrémité côté profilé porteur 4, un talon 13 dont la face arrière est appelée à venir buter contre le chant adjacent 14 dudit profilé porteur 4.

Le bras horizontal porteur 2 se raccorde à pivotement à la structure d'accrochage 3 qui le porte par un axe vertical 15 de pivotement et de translation, monté à rotation libre à la base de la structure d'accrochage et monté en débattement vertical entre une position haute et une position basse.

L'axe de pivotement 15 comporte à proximité de son extrémité supérieure une pièce de butée 16 transversale dont la fonction multiple sera décrite ci-après.

La pièce de butée 16 est réalisée par exemple sous la forme d'un ergot de forme cylindrique ou rectangulaire tel que 17, transversal à l'axe 15, d'épaisseur déterminée "E" permettant de réaliser le verrouillage en position rabattue comme on le verra ci-après.

La pièce de butée est décalée angulairement par rapport au bras d'une valeur permettant d'obtenir des positions opérantes, initiale et finale, de part et d'autre d'une position moyenne perpendiculaire au profilé porteur.

La structure d'accrochage 9 est formée par une équerre 18 constituée d'une base de raccordement 19 avec le bras porteur 2, d'une semelle d'appui 20 coudée à angle droit pour épouser exactement le chant latéral adjacent 14 du profilé porteur 4 et sa face supérieure 5 garnie ou non d'un profilé d'accrochage et de verrouillage 6 et d'une partie supérieure en forme de platine horizontale d'accrochage et de verrouillage 21 constituant le retour de la semelle d'appui 20 sur la face supérieure 5. La semelle d'appui 20 porte deux ailes parallèles de rigidification 22 et 23 perpendiculaires aux deux plans de l'équerre 18. Ces deux ailes sont réunies à leur base par une platine-entretoise 24 faisant suite à la base de raccordement 19. Elles sont réunies en partie supérieure par une tige servant de poignée 25.

Bien entendu, la structure d'accrochage 3 peut être réalisée d'une seule pièce par moulage ou selon diverses autres particularités de construction.

La base de raccordement 19 et la platine-entretoise 24 sont traversées par un alésage médian 26 servant de palier de guidage en pivotement et en translation à l'axe de pivotement et de translation 15 dont l'ajustement entre ces pièces est lâche pour permettre un coulissement aisé dudit axe 15 aussi bien dans ses mouvements de pivotement que dans ses mouvements de translation verticaux dans un plan parallèle au chant latéral adjacent 24 du profilé porteur 4.

Les ailes 22 et 23 présentent chacune, en partie frontale de la structure d'accrochage 3, un chant rectiligne incliné, respectivement 27 et 28 formant une rampe inclinée de poussée 29 et 30 pour la pièce de butée 16, provoquant ainsi un débattement angulaire référencé 31 lors de la descente de l'axe de pivotement et de translation 15 correspondant à la course 32 de ladite pièce de butée 16 en débattement angulaire 33 le long de l'une ou l'autre rampe de poussée 29 ou 30 consécutif au déplacement vertical total 34 du bras. On dispose ainsi d'un ajustement angulaire automatique vers la roue à maintenir provoqué par la descente du bras sous l'effet de la charge à supporter.

L'équerre 18 se termine vers le haut par la platine horizontale d'accrochage et de verrouillage 21 qui présente, en sous-face, des moyens d'accrochage et de verrouillage 35 venant coopérer avec les perforations ou ouvertures 7 du profilé d'accrochage et de verrouillage 6 ou du profilé porteur 4 en vue du maintien puis du verrouillage.

Les moyens d'accrochage et de verrouillage 35 sont réalisés par exemple par une série de plots de forme adaptée à celle des perforations ou ouvertures 7. On distingue ainsi deux plots oblongs fixes 36 et 37 séparés par un plot central pivotant 38 commandé en mouvements par une manette de verrouillage 39 entre une position déverrouillée dans laquelle le plot central se trouve parallèle aux plots fixes et une position verrouillée dans laquelle il se trouve perpendiculaire à ceux-ci et donc parallèle à la grande dimension des ouvertures ou perforations 7. Les plots oblongs 36, 37 et 38 traversent les ouvertures ou perforations 7 et calent longitudinalement l'ensemble. Le plot central 38 assure le verrouillage par blocage de la sous-face de la platine 22, soit contre la partie supérieure du profilé d'accrochage et de verrouillage 6, soit contre la face supérieure 5 du support porteur 4.

En effet, le corps des plots oblongs 36, 37 et 38 présente une face arrière plane en retrait, délimitant avec la sous-face de la platine 21 un intervalle légèrement supérieur à l'épaisseur du profilé d'accrochage et de verrouillage 6, permettant ainsi d'assurer un blocage par encastrement ou pincement.

La présente invention n'est pas limitée aux seuls moyens d'accrochage et de verrouillage décrits ci-dessus.

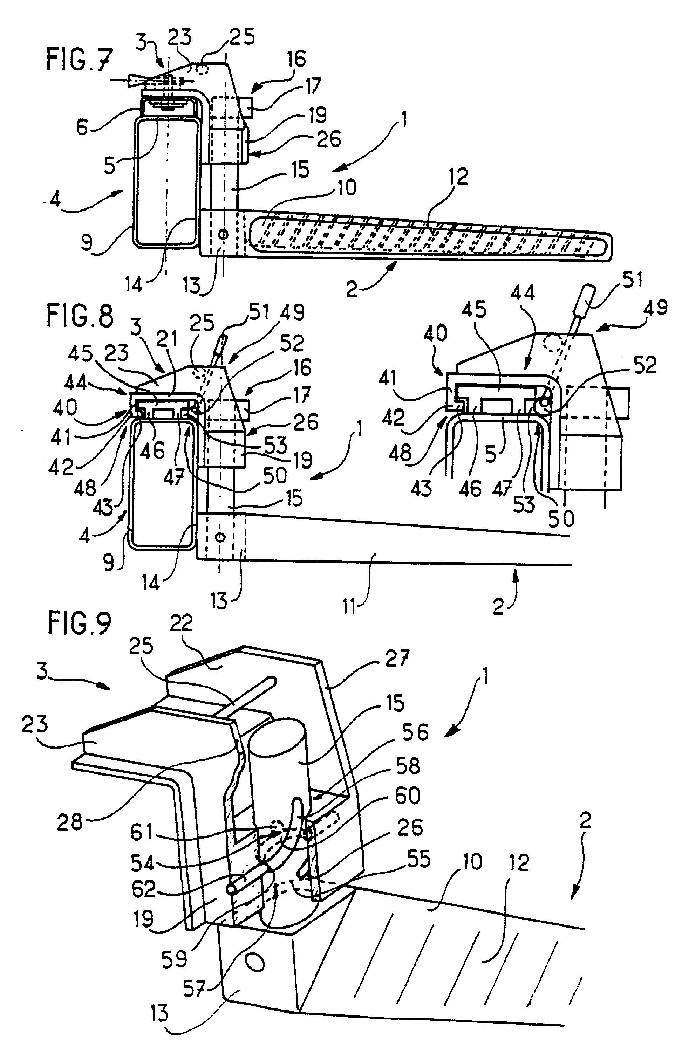

On peut envisager, comme représenté sur la figure 8, un accrochage par le bord terminal 40 de la platine 21 de l'équerre 18 qui serait conformé en rebord d'accrochage 41 par exemple recourbé en crochet 42 avec un retour 43 à angle droit, apte à venir s'accrocher sur un profilé d'accrochage et de coulissement 44 rapporté sur le chant supérieur 5 du profilé porteur 4, tel que représenté sur la figure 8.

Le profilé d'accrochage peut être formé d'une platine 45 reliée à la face supérieure du profilé porteur par un jambage double à deux nervures saillantes 46 et 47 permettant de ménager un intervalle en retrait 48 et un bord surélevé sur et dans lesquels vient s'encastrer le rebord d'accrochage 41.

Cette conformation permet d'accrocher l'élément de soutien selon l'invention. Elle permet aussi, grâce à l'ajustement mécanique lâche entre la semelle et son support d'accrochage de permettre le coulissement le long du profilé 44.

Pour cette raison, le bras porteur pourra être bloqué longitudinalement sur le profilé en un endroit quelconque par serrage ou blocage, par exemple par un verrou de coincement 49 formé par exemple d'un dispositif à excentrique 50 commandé par un levier 51 dont le galet 52 agit par poussée et serrage sur le bord opposé 53 du profilé d'accrochage.

L'avantage important de ces modes de réalisation concerne l'immobilisation rapide en un endroit quelconque sur le profilé porteur. Possédant en plus la fonction d'auto-ajustement en position opérante finale à débattement angulaire suffisant, ces variantes confèrent un facilité exceptionnelle d'utilisation.

Une autre variante mettant en oeuvre le principe de base de l'invention est représentée sur la figure 9.

Selon cette variante, la déviation angulaire d'auto-ajustage et le pivotement de rabattement en position escamotée sont obtenus par un profil 54 de came en creux ou en relief réalisé sur la surface latérale 55 du cylindre 56 constituant l'axe de pivotement 15.

Plus particulièrement sur la figure 9 on a représenté un profil en creux sous la forme d'une rainure 57 dont le tracé comprend une partie supérieure 58 quasi verticale légèrement incurvée se prolongeant vers le haut et se raccrochant par une zone de déviation 59 sur une deuxième partie selon une rainure circulaire 60 se développant sur et autour de la surface latérale 55 du cylindre 56 formant l'axe de pivotement 15 selon un cercle situé dans un plan horizontal perpendiculaire à celle-ci.

Cette rainure circulaire présente à partir de la zone de déviation 59 à une distance d'environ un quart de cercle, une encoche transversale 61 permettant le blocage en position escamotée. Le tracé du profil de came 54 correspond à un état escamoté en position haute.

Bien entendu, l'état escamoté en position basse est obtenu avec une rainure circulaire 60 située en partie supérieure du cylindre.

Le cylindre 56 est maintenu verticalement par au moins un doigt transversal de guidage 62 fixe dont l'extrémité est enfoncée dans la rainure 57 de profil de came qui lui sert de guidage et impose les mouvements verticaux et de pivotement du bras porteur.

Cette variante constitue en équivalent parfait des variantes précédentes et notamment de la variante de base car les moyens remplissent les mêmes fonctions en vue des mêmes résultats. Ainsi, d'une part, le rabattement par pivotement en position basse et verrouillage est obtenu de la même façon et, d'autre part, le pivotement d'auto-ajustage par descente du bras est identiquement conservé.

Plus généralement et dans le même esprit, on pourra aussi bien dans d'autres modes d'exécution et d'autres variantes, réaliser le pivotement du bras autour de l'axe 15 rendu fixe.

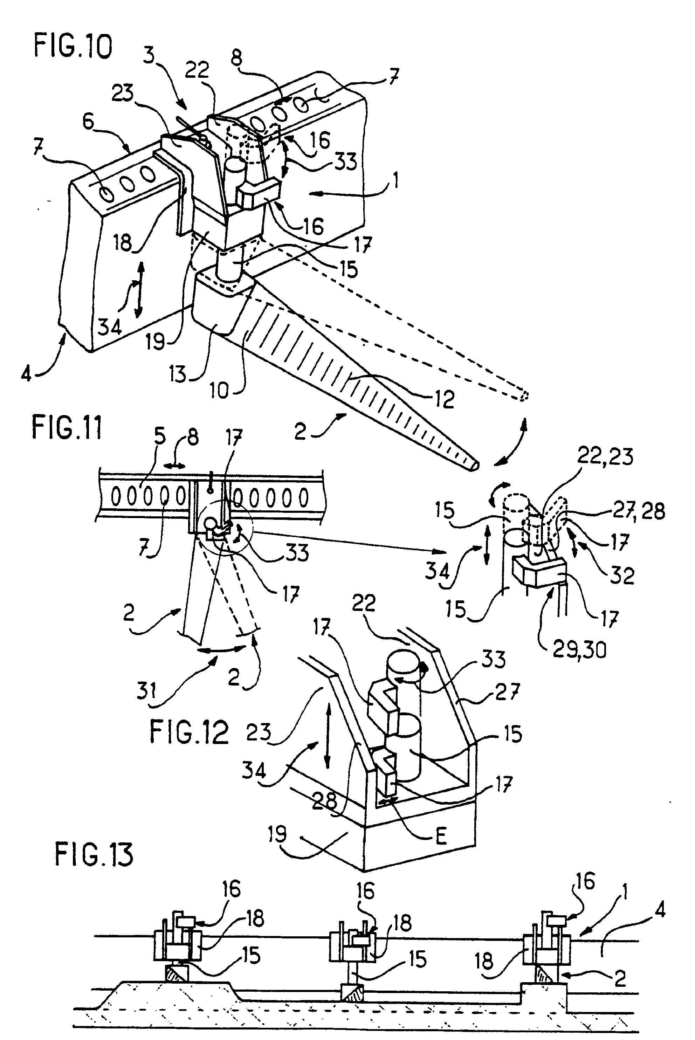

Afin de verrouiller les bras en position basse escamotée dans laquelle ils sont rabattus contre le chant latéral adjacent du profilé porteur, on prévoit une épaisseur de butée "E" (figure 12) telle qu'elle occupe tout l'intervalle disponible entre l'axe de pivotement 15 et le flanc adjacent de l'aile correspondante. On peut ainsi bloquer la butée contre le flanc de l'aile adjacente et donc verrouiller le bras dans sa position basse rabattue. Pour le déverrouiller, il suffit de le soulever verticalement. La butée se dégage de son logement entre l'axe et le flanc de l'aile par le dégagement de la rampe, libérant ainsi le bras en rotation ainsi que le montre la figure 12.

La figure 13 a pour but d'illustrer l'avantage important pour l'élément de soutien selon l'invention, de présenter une latitude de mouvements verticaux permettant d'adapter automatiquement la position du bras porteur aux irrégularités et saillies diverses que peut comporter le plan de chargement et qui pourraient se trouver, pour l'une ou l'autre d'entre elles, à la verticale de l'un ou l'autre élément de soutien selon l'invention.

Comme indiqué, les éléments de soutien selon l'invention sont appelés à être utilisés par paires. Dans ces paires on distinguera des éléments dits "droits" c'est-à-dire utilisés du côté droit dans lesquels la pièce de butée 16 sera tournée vers la droite et des éléments dits "gauches" c'est-à-dire utilisés du côté gauche dans lesquels la pièce de butée 16 sera tournée vers la gauche.

On décrira maintenant le fonctionnement et l'utilisation des différents modes de réalisation de l'invention ainsi que la façon dont les efforts verticaux et horizontaux et les couples correspondants sont repris.

Chaque élément de soutien est amené présenté perpendiculairement au profilé porteur 4 puis mis en place à l'endroit le plus approprié par appui de sa semelle en équerre contre les chants correspondants et engagement simultané des plots 36, 37 et 38 dans les ouvertures ou perforations 7 correspondantes et blocage par action sur la manette 39 commandant les structures de verrouillage.

Pour les variantes à coulissement, on accroche chaque élément de soutien à l'endroit le plus approprié de part et d'autre d'une roue en contact avec le pneu et on le bloque en position par action sur la manette du verrou de coincement.

L'effet de la charge sur chaque bras porteur par soulèvement du profilé porteur provoquera l'abaissement du bras porteur dans sa position la plus basse. Au cours de ce mouvement, le bras pivotera légèrement vers le pneu par le jeu de la butée coulissant vers le bas le long de la rampe de poussée avec laquelle elle est en contact. Ce mouvement d'auto-ajustage angulaire en rapprochement angulaire des bras l'un vers l'autre dans le sens du pincement apporte une meilleure sécurité et une meilleure efficacité du soutien. Le pneu sera ainsi véritablement immobilisé en butée, pincé par les deux bras de la paire, contraints en rapprochement l'un vers l'autre.

Les différents efforts auxquels est soumis l'élément de soutien selon l'invention sont les suivants :
- efforts correspondant à la charge se décomposant sur le plan oblique d'appui du bras porteur en un effort vertical et un effort longitudinal ;
- efforts horizontaux, longitudinaux et latéraux provenant des diverses forces dynamiques : freinage, accélération, force centrifuge en virage, roulis, tangage et mouvements de lacets.

Ces différents efforts sont supportés par l'accrochage, l'appui sur le profilé porteur par la semelle, le bras et son axe et la réaction de la pièce de butée sur sa portée.

## Revendications

1. Elément de soutien d'un véhicule par ses roues utilisable par paires, notamment sur véhicule porte-voitures, élément de soutien s'accrochant et se verrouillant par une structure d'accrochage (3) sur un profilé porteur (4) par engagement de structures dans des ouvertures ou perforations (7) prévues dans un profilé d'accrochage et de verrouillage (6) rapporté sur la face supérieure (5) du profilé porteur (4) ou pratiquées dans cette face supérieure (5), la pièce d'accrochage maintenant un bras porteur (2) caractérisé en ce que la bras porteur (2) est monté dans la structure d'accrochage en débattement vertical entre une position haute et une position basse et à pivotement dans la pièce d'accrochage entre une position rabattue de repos contre le chant adjacent du profilé porteur (4) et une position sortie de travail sensiblement transversale au profilé porteur par un axe (15) de pivotement et de translation, la position opérante de soutien étant obtenue automatiquement à partir de la position sortie de travail par un pivotement d'auto-adjustage vers le pneu de la roue à soutenir, pivotement d'auto-ajustage limité angulairement, et engendré sous l'effet de la charge par le mouvement vertical de descente de l'axe de pivotement en appui de déplacement sur une portée en vue du rapprochement du bras contre le pneu de la roue à soutenir.

2. Elément de soutien selon la revendication 1 caractérisé en ce que la portée est une rampe inclinée de poussée (29) ou (30) conformée dans le corps de la structure d'accrochage (3) et en ce que l'axe (15) comporte une pièce du butée transversale (16) se déplaçant le long d'une rampe inclinée de poussée lors de la descente du bras sous l'effet de la charge.

3. Elément de soutien selon la revendication 2 caractérisé en ce que la pièce de butée est un ergot transversal (17) parallélépipèdique ou sous la forme d'une tige décalée angulairement par rapport au bras.

4. Elément de soutien selon les revendications 1, 2 et 3 caractérisé en ce que la structure d'acrochage (3) est une pièce en équerre bordée par deux ailes (22) et (23).

5. Elément de soutien selon les revendications 2, 3 et 4 caractérisé en ce que la rampe inclinée de poussée (29) ou (30) est l'un ou l'autre chant de face avant de l'une ou l'autre aile (22) ou (23) bordant la structure d'accrochage (3).

6. Elément de soutien selon la revendication 1 caractérisé en ce que la structure d'accrochage (3) est adaptée, montée coulissante sur un profilé de coulissement (44).

7. Elément de soutien selon la revendication 5 caractérisé en ce qu'il comporte un dispositif d'immobilisation par coincement ou serrage sur le profilé de coulissement (44).

8. Elément de soutien selon la revendication 1 caractérisé en ce que sur ou dans l'axe de pivotement et de translation (15), on prévoit un profil de came (54) sur ou dans lequel se déplace l'extrémité d'un doigt transversal de guidage (62) portant ledit axe.

9. Elément de soutien selon les revendications 1 et 8 caractérisé en ce que l'axe de pivotement et de translation (15) est fixe, le bras porteur étant mobile autour de cet axe.

## Ansprüche

1. Element zum Abstützen eines Fahrzeuges an seinen Rädern, das paarweise verwendbar ist, insbesondere bei Autotransportern, wobei sich das Abstützelement über eine Einhängestruktur (3) auf einem Profilträger (4) einhängt und verriegelt und zwar durch Eingreifen von Elementen in öffnungen oder Durchbrüchen (7), die in einem auf der Oberseite (5) des Profilträgers (4) angebrachten Profil zum Einhängen und Verriegeln (6) vorgesehen oder die in diese Oberseite (5) eingearbeitet sind, wobei das Einhängeteil einen Tragarm (2) festhält, **dadurch gekennzeichnet,** daß der Tragarm (2) in der Einhängestruktur zwischen einer oberen und einer unteren Stellung vertikal verschiebbar und in dem Einhängeteil zwischen einer gegen die benachbarte Wand des Profilträgers (4) geschwenkten Ruhestellung und einer etwa quer zum Profilträger liegenden Arbeitsausgangsstellung über einem Bolzen (15) zum Drehen und Verschieben drehbar montiert ist, wobei sich die Arbeitsstellung beim Abstützen automatisch einstellt, ausgehend von der Arbeitsausgangsstellung über eine Selbsteinstell-Drehbewegung gegen den Reifen des abzustützenden Rades, bei begrenztem Drehwinkel für die Selbsteinstell-Drehbewegung, und verursacht unter dem Einfluß der Last durch die vertikale Abwärtsbewegung des Drehbolzens, der sich zur Erreichung der Zustellung des Armes gegen den Reifen des abzustützenden Rades bei seiner Verschiebung auf einer tragenden Fläche abstützt.

2. Abstützelement nach Anspruch 1, **dadurch gekennzeichnet,** daß die tragende Fläche eine schräge, in das Gebilde der Einhängestruktur (3) eingepaßte Druckerzeugungsrampe (29 oder 30) ist, und daß der Bolzen (15) ein quer angesetztes Anschlagstück (16) aufweist, das sich bei der Abwärtsbewegung des Armes unter Belastung längs einer schrägen Druckerzeugungsrampe verschiebt.

3. Abstützelement nach Anspruch 2, **dadurch gekennzeichnet,** daß das Anschlagsstück ein parallelepipedischer oder ein stiftförmiger Quernocken (17) ist, der in Bezug auf den Arm in einem Winkel versetzt angebracht ist.

4. Abstützelement nach Anspruch 1, 2 und 3, **dadurch gekennzeichnet,** daß die Einhängestruktur (3) ein von zwei Rippen (22,23) begrenztes Winkelstück ist.

5. Abstützelement nach den Ansprüchen 2, 3 und 4, **dadurch gekennzeichnet,** daß die schräge Druckerzeugungsrampe (29) oder (30) der eine oder der andere Rand der Vorderseite, der einen oder anderen, die Einhängestruktur (3) begrenzende Rippe (22) oder (23) ist.

6. Abstützelement nach Anspruch 1, **dadurch gekennzeichnet,** daß die Einhängestruktur (3) einem Verschiebeprofil (44) angepaßt und auf ihm verschiebbar montiert ist.

7. Abstützelement nach Anspruch 5, **dadurch gekennzeichnet,** daß es eine Vorrichtung zum Festhalten durch Klemmung oder Verspannung auf dem Verschiebeprofil (44) aufweist.

8. Abstützelement nach Anspruch 1, **dadurch gekennzeichnet,** daß man auf oder in dem Bolzen zum Schwenken und Verschieben (15) ein Kurvenprofil (54) vorsieht, auf oder in welchem sich das Ende eines quer angesetzten Führungsfingers (62) bewegt, der den Bolzen trägt.

9. Abstützelement nach den Ansprüchen 1 und 8, **dadurch gekennzeichnet,** daß der Bolzen zum Schwenken und Verschieben (15) feststeht, wobei der Tragarm um diesen Bolzen herum beweglich ist.

## Claims

1. Element for support of a vehicle by its wheels usable in pairs, particularly on a car transporter vehicle, the support element being fastened and locked by a fastening structure (3) onto a bearer formed section (4) by engagement of structures into openings or perforations (7) provided in a fastening and locking standard section (6) added onto the top face (5) of the bearer formed section (4) or made in this top face (5), the fastening piece holding a carrier arm (2) characterised in that the carrier arm (2) is mounted in the fastening structure with vertical mouvement between a high position and a low position and capable of pivoting in the fastening piece between a rest position turned back against the adjacent side of the bearer formed section (4) and a working position projecting substantially transversally to the bearer formed section by a shaft (15) for pivoting and translation, the operative support position being obtained automatically from the projecting working position by a pivoting for self-adjustment towards the tyre of the wheel to be supported, pivoting for selfadjustment limited angularly, and produced under the effect of the load by the vertical downward movement of the shaft for pivoting movably resting on a bearing surface with a view to bringing the arm closer against the tyre of the wheel to be supported.

2. Support element as claimed in claim 1 characterised in that the bearing surface is an inclined thrust ramp (29) or (30) formed in the body of the fastening structure (3) and in that the shaft (15) comprises a transverse stop piece (16) being displaced along an inclined thrust ramp during the descent of the arm under the effect of the load.

3. Support element as claimed in claim 2 characterised in that the stop piece is a transverse peg (17) parallelepipedic or in the form of a rod angularly offset with respect to the arm.

4. Support element as claimed in claims 1, 2 and 3 characterised in that the fastening structure (3) is a right-angle bracket type piece edged by two wings (22) and (23).

5. Support element as claimed in claims 2, 3 and 4 characterised in that the inclined thrust ramp (29) or (30) is one or other front face edge of one or other wing (22) or (23) edging the fastening structure (3).

6. Support element as claimed in claim 1 characterised in that the fastening structure (3) is adapted, mounted so as to slide on a standard section (44) for sliding.

7. Support element as claimed in claim 5 characterised in that it comprises a device for locking by jamming or tightening onto the standard section (44) for sliding.

8. Support element as claimed in claim 1 characterised in that on or in the shaft (15) for pivoting and translation is provided a cam profile (54) on or in which is displaced the end of a transverse guiding peg (62) bearing the said shaft.

9. Support element as claimed in claims 1 and 8 characterised in that the shaft (15) for pivoting and translation is fixed, the carrier arm being movable about this shaft.

FIG.1

FIG.2

FIG.3

FIG.4

FIG.5

FIG.6

FIG.7

FIG.8

FIG.9

FIG.10

FIG.11

FIG.12

FIG.13